Europäisches Patentamt

European Patent Office

Office européen des brevets

(11) Veröffentlichungsnummer: **0 129 643**

**A1**

(12) # EUROPÄISCHE PATENTANMELDUNG

(21) Anmeldenummer: **84102883.0**

(22) Anmeldetag: **16.03.84**

(51) Int. Cl.⁴: **F 04 B 21/02**
B 05 B 9/043, B 65 D 47/34

(30) Priorität: **28.04.83 DE 3315334**

(43) Veröffentlichungstag der Anmeldung:
**02.01.85 Patentblatt 85/1**

(84) Benannte Vertragsstaaten:
**CH DE FR GB IT LI NL**

(71) Anmelder: **Ing. Erich Pfeiffer GmbH & Co. KG**
**Josef-Bosch-Strasse 4**
**D-7760 Radolfzell(DE)**

(72) Erfinder: **Märte, Leo**
**Rathausstrasse 25**
**D-7767 Sipplingen(DE)**

(74) Vertreter: **Patentanwälte Ruff und Beier**
**Neckarstrasse 50**
**D-7000 Stuttgart 1(DE)**

(54) **Zerstäuber- oder Dosierpumpe.**

(57) Eine Dosier- oder Zerstäuberpumpe (11) für flüssige, breiartige oder cremeartige Medien besitzt zusätzlich zu ihrem an der Pumpenkammer vorgesehenen Auslaßventil (23) ein Zusatzventil (36), das in dem Betätigungsdrücker (28) für die Pumpe vorgesehen ist und die Austrittsöffnung (43) unmittelbar an ihrer Mündung abschließt. Der Ventilkörper (35) des Zusatzventils (36) wird durch den Flüssigkeitsdruck über einen Stufenkolben betätigt.

Bei einer Variante kann der Ventilkörper Funktionsteil einer Zerstäuberdüse sein. Das Zusatzventil (36) verhindert Eintrocknen oder andere negative Beeinflussung des Mediums im Austrittskanal.

FIG. 1

A 21 023 EP

Anmelderin:    Ing. Erich Pfeiffer
GmbH & Co. KG
Josef-Bosch-Straße 4

7760 Radolfzell

## Zerstäuber- oder Dosierpumpe

Die Erfindung betrifft eine Zerstäuber- oder Dosierpumpe mit einem Auslaßventil, einem stromab davon liegenden Auslaßkanal, der in einer Mündung in Form einer Öffnung oder einer Zerstäuberdüse endet, und einem im Auslaßkanal angeordneten zusätzlichen Verschlußorgan.

Aus der deutschen Patentschrift 21 62 514 ist eine insbesondere für die Ausgabe von cremeartigen oder breiartigen Medien vorgesehene Handpumpe bekannt geworden, die eine einfachwirkende Schubkolbenpumpe nach Art üblicher Kolbenpumpen für Parfümzerstäuber aufweist. Das Auslaßventil ist am auslaßseitigen Ende der hohlen Kolbenstange vorgesehen, dem eine Vorrichtung zugeordnet ist, die Medium, das nach Ende des Förderhubes in dem an das Ventil anschließenden Auslaßkanal vorhanden ist, in einen Zwischenspeicher zurücksaugt, um die Verhärtung an der Auslaßdüse zu verhindern. Zwischen diesem Speicherraum und dem Auslaßkanal ist ein Verschlußorgan in Form einer geschlitzten Scheibe vorgesehen, die nach beiden Seiten öffnen kann und unter ihrer Eigenelastizität einen Teilverschluß bewirkt.

Es ist ferner aus der GB-PS 1 366 774 eine Zerstäuberpumpe bekannt geworden, deren Auslaßventil eine doppelte
Verschließfunktion hat, indem es einerseits unter dem
Innendruck axial von einem Ventilteller abhebt und andererseits durch radiale Aufweitung eines schlauchartigen Abschnittes des gleichen Kolbenabschnittes eine Querbohrung
in der Kolbenstange freigibt. Da das zweite Ventil jedoch
weit von der eigentlichen Ausgabeöffnung bzw. der Zerstäuberdüse entfernt ist, kann eine Beeinflussung des zur
Strömungsrichtung hinter dem Auslaßventil befindlichen
Mediums nicht ausgeschlossen werden.

Aufgabe der Erfindung ist es, eine Zerstäuber- oder Dosierpumpe zu schaffen, mit der verhindert werden kann, daß das
im Bereich zwischen dem Pumpenzylinder und der Ausgabeöffnung vorhandene Medium eintrocknet oder auf andere Weise
durch Umgebungseinflüsse geschädigt wird.

Diese Aufgabe wird gemäß der Erfindung durch das Kennzeichen des Anspruchs 1 gelöst.

Vorzugsweise kann das Ventil vom Druck des geförderten
Mediums betätigbar sein. Es ist vorzugsweise unmittelbar
an der Mündung angeordnet. Es kann also wirksam verhindern,
daß das im Auslaßkanal vorhandene Medium Luft ausgesetzt
ist und dort durch Austrocknen, Sauerstoffeinfluß oder
Kontominierung unbrauchbar oder gefährdet wird. Die Anordnung des Ventils zusätzlich zum Auslaßventil hat den
Vorteil, daß der Auslaßkanal zwischen der Mündung und der
Pumpenkammer nicht zum Druckraum der Pumpenkammer selbst
gehört, so daß die Betätigungskappe, die normalerweise die
Ausgabeöffnung bzw. die Zerstäuberdüse enthält, durch einfaches Abziehen ausgetauscht werden kann. Während der Betätigung besteht keine Gefahr der Lösung, weil die Verbindung durch den manuellen Betätigungsdruck auf den Betätigungsknopf zusammengedrückt wird.

Das Ventil kann einen von innen mit der Mündungsöffnung zusammenarbeitenden stangenartigen Ventilkörper aufweisen, der
wie eine Düsennadel in der Mündungsöffnung sitzt und ggf.
auch so ausgebildet sein kann, daß er die Mündungsöffnung
von eventuell dort antrocknendem Medium freistoßen kann.

Vorteilhaft kann das Ventil von einem auf dem Ventilkörper
angeordneten Kolben betätigbar sein. In diesem Falle wird
das Zusatzventil vom Flüssigkeitsdruck unmittelbar betätigt,
wobei insbesondere der Kolben ein Doppelkolben mit unterschiedlichen, von beiden Seiten beaufschlagten Kolbenflächen
ist. Somit kann der Ventilkörper des Zusatzventils in der
Austrittsöffnung selbst angeordnet sein und sich beim Aufbau des Öffnungsdruckes von der Mündungsöffnung weg
verschieben.

Bei einer vorteilhaften Ausführungsform der Erfindung kann
der Ventilkörper durch eine aus elastischen, nach außen
spreizbaren Stegen bestehende Feder gebildet sein, deren
Enden vorzugsweise an einer kegelförmigen Fläche anliegen.
Vorzugsweise können dabei Ventilstange, Kolben und Stege
einstückig aus Kunststoff hergestellt sein. Dieses sehr
einfache Bauteil erhöht also den Aufwand des gesamten
Ventils kaum und ist trotzdem ausreichend zuverlässig.

Das Ende des Ventilkörpers kann vorzugsweise ein Bauteil
einer Zerstäuberdüse bilden. Dabei kann die Zerstäuberdüse einen vom Ventilkörper veränderlichen Düsenquerschnitt haben. Es ist auch möglich, die drei Kanäle der
Zerstäuberdüse in Form von drei Nuten an der Pumpe anzuordnen, die vom Ventilkörper überdeckt sind. Dadurch ist es
möglich, einerseits das Zusatzventil als Bauteil der Zerstäuberdüse selbst zu verwenden und somit u.a. andere Bauteile einzusparen, und es ist ferner möglich, den Querschnitt der Zerstäuberdüse in Abhängigkeit von der Öffnung des Zusatzventils, d.h. von der Durchsatzmenge, zu verändern und damit eine auch bei unterschiedlichen Ausgabemengen gleichmäßige Zerstäubung besser zu gewährleisten. Ferner wirkt der Ventilkörper als bewegliches Teil innerhalb der Zerstäuberdüse zur Befreiung der Zerstäuberdüse von unerwünschten Rückständen. Durch die Zusammensetzung der Düse aus einer Düsenkappe und einer Ventilnadel kann eine gesonderte, von außen her eingepreßte Düse vermieden werden, deren Festlegung bisher mit großer Sorgfalt vorgenommen werden mußte, weil die selbsttätige Lösung einer Düse unter dem Innendruck, insbesondere bei pharmazeutischen Produkten, zu einer katastrophalen Überdosierung oder auch Verletzung des Patienten führen könnte.

Mit der Erfindung sind zahlreiche Vorteile zu erreichen. Bis zum Öffnen der Düse baut sich im Auslaßkanal ein gewisser Innendruck auf, bis das Zusatzventil öffnet. Das bedeutet, daß die Zerstäubung vom ersten Moment an vollständig und tropfenfrei erfolgt. Das gleiche gilt für das Schließen des Ventils. Das Zusatzventil kann, insbesondere, wenn es unabhängig von der mechanischen Bewegung des Pumpenkammer-Auslaßventils betätigt wird, in beliebiger Lage eingebaut werden, beispielsweise zentrisch in Achsrichtung der Pumpe bei einer mittigen Ausgabeöffnung (z.B. bei einem Nasenspray) oder auch quer zur Pumpenachse bei seitlicher Ausgabeöffnung. Es ist auch im übrigen unabhängig von der Gestaltung der Ausgabeöffnung, und es können für dieselbe Pumpe mehrere unterschiedliche Betätigungsköpfe vorgesehen werden, die jeweils ihr eigenes Zusatzventil mit der vorteilhaften, unter dem Druck des Mediums zurückziehbaren Düsennadel haben. Die Erfindung ist für Medien unterschiedlicher Arten brauchbar, und zwar sowohl für leicht flüssige Medien, die z.B. zerstäubt werden und vor Austrocknung bzw.

Ausdünstung wirksamer Bestandteile (Parfums) geschützt
werden sollen, als auch für breiige Medien, die vor
Eintrocknung, Oxydation oder Kontaminierung zu schützen
sind.

Merkmale von bevorzugten Ausführungen der Erfindung gehen
aus der Beschreibung und den Zeichnungen hervor, wobei
diese Merkmale und diejenigen der Unteransprüche jeweils
für sich allein oder zu mehreren in Form von Unterkombinationen bei einer Ausführungsform der Erfindung verwirklicht sein können. In der Zeichnung zeigen:

Fig. 1    einen Schnitt längs der Achse einer Dosierpumpe,
Fig. 2    ein Detail einer als Zerstäuberpumpe ausgebildeten Ausführungsform und
Fig. 3
und  4    Detailschnitte durch Varianten des Betätigungskopfes einer Dosierpumpe.

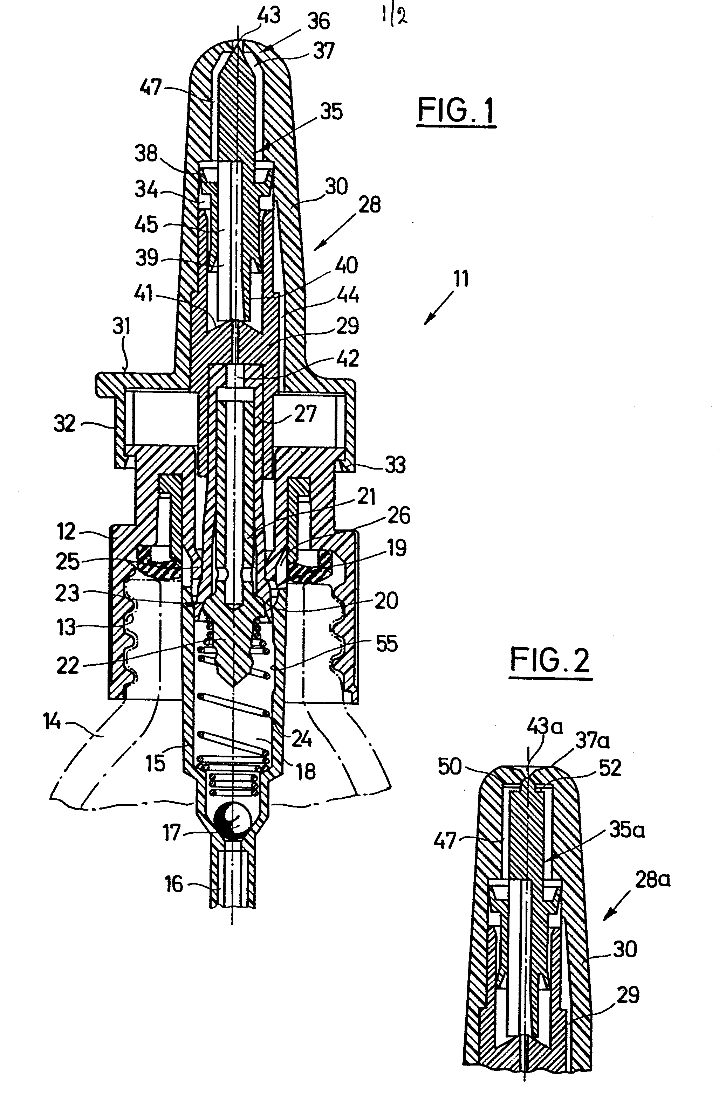

Die in Fig. 1 dargestellte Dosierpumpe 11 besitzt einen
Pumpenkörper 12, der mit einem Gewinde 13 auf einen strichpunktiert angedeuteten Behälter 14 aufschraubbar ist, der
das auszugebende Medium enthält. Im Pumpenkörper 12 ist
durch Einschnappen ein Pumpenzylinder 15 befestigt, der
in den Behälter hineinragt und an dessen unterem Ende ein
Saugschlauch 16 eingesteckt ist, der bis zum Behälterboden
herunterreicht und über den das Medium angesaugt und über
ein Einlaßventil 17 in die Pumpenkammer 18 hochgesaugt
wird.

In der Pumpenkammer verläuft ein Kolben 19, der eine
elastische Manschette 20 aufweist, die im Zusammenwirken
mit einem an einer Kolbenstange 21 angeordneten Ventilkörper 22 gleichzeitig das Auslaßventil 23 für die Pumpenkammer bildet. Dieses Ventil ist im einzelnen in der

DE-PS 13 02 372     beschrieben. Es öffnet sich unter
dem Flüssigkeits-Innendruck in der Pumpenkammer durch
axiale Verschiebung des Manschettenteils, wobei der
Hals der Manschette axial gestaucht wird und somit die
Federkraft zum Schließen des Ventils liefert. Der Kolben
wird durch eine Feder 24 aufwärts gedrückt, die die
Funktion einer Rückholfeder hat und außerdem die konische
Oberseite der Kolbenmanschette 20 an eine Dichtschulter 25
anlegt, die Luftausgleichsöffnungen 26 abschließt, wenn
der Kolben 19 durch die Feder 24 in seine obere, unbetätigte Position gedrückt ist.

Das Kolbenbauteil, das an seinem unteren Abschnitt die
elastische Kolbenmanschette 20 aufweist, umgibt die hohle
Kolbenstange 21 noch über ihr Ende hinaus und ist in diesem
Schaftabschnitt 27 in einem zum Betätigungsdrücker 28 gehörenden Einsatzteil 29 eingespannt. Der Betätigungsdrücker 28
besteht aus diesem Einsatzteil 29 und einem diesen umgebenden Drückerteil 30, der in axialer Richtung fingerartig
langgestreckt ist und an seinem unteren Ende eine zur Betätigung mit den Fingern vorgesehene Schulter 31 und einen
daran anschließenden zylindrischen Rand 32 aufweist, der
über den Pumpenkörper herübergreift und ggf. durch Rastnasen
33 daran festgelegt ist.

Der Einsatzteil 29 und der hohle Drückerteil 30 bilden einen
Betätigungszylinder 34 mit zwei Durchmesserabstufungen, in
dem ein Ventilkörper 35 eines Zusatzventils 36 angeordnet
ist. Der Betätigungszylinder 34 bildet sich aus der Zusammensetzung der Teile 29 und 30, wobei der Zylinderabschnitt mit größerem Durchmesser im Drückerteil liegt und
der Abschnitt kleineren Durchmessers im Einsatzteil und damit ja zum Pumpenkörper hin liegt.

Der bewegliche Ventilkörper 35 besteht aus einer düsennadelartigen Stange mit einem kegeligen Ventilsitz 37
an seinem oberen Ende und einem angeformten Stufenkolben,
dessen elastische Manschetten 38, 39 in den einzelnen
Stufen des Betätigungszylinders 34 laufen und dem Ventilkörper eine begrenzte axiale Beweglichkeit ermöglichen.
Das vom Ventilsitz abgewandte Ende des Ventilkörpers ist
durch mehrere Schlitze in drei fahnenartige Federstege 40
aufgeteilt, die auf einer kegeligen Fläche 41 aufsitzen,
die den Betätigungszylinder 34 nach unten abschließt und
in deren Mitte eine Verbindungsöffnung zur hohlen Kolbenstange endet, die zum Medium-Förderkanal 42 gehört.

Die Federstege 40 können auf der konischen Fläche 41 seitlich weggleiten, wobei sie aufgrund der Federeigenschaften
des Kunststoffs, aus dem der Ventilkörper besteht, als
Andruckfeder dienen und den Ventilsitz 37 auf die Innenfläche einer zentrischen Austrittsöffnung 43 am oberen Ende
des Betätigungsdrückers 28 dichtend drücken. Der zwischen
den beiden Kolbenmanschetten 38, 39 liegende Teil des
Betätigungszylinders 34 ist über einen Ausgleichskanal 44
mit der Atmosphäre verbunden. Die Schlitze 55 im Ventilkörper, die die Federstege abteilen, reichen bis über die
obere Kolbenmanschette 38 und bilden so ebenfalls einen
Teil des Mediumförderkanals.

Die beschriebene Dosierpumpe arbeitet wie folgt: Wenn durch
Drücken auf die Schulterfläche 31 der Betätigungsdrücker 28
nach unten gedrückt wird, läuft die Kolbenmanschette 20 in
der Pumpenkammer 18 abwärts und komprimiert das darin enthaltene Fördermedium. Durch den auf die Kolbenmanschette
ausgeübten Flüssigkeitsdruck wird der schaftartige Abschnitt dieser Manschette unter axialer Stauchung aufwärts
verschoben und öffnet das Auslaßventil 23 der Pumpe, so
daß Medium an dem ringförmigen Ventilsitz vorbei, durch Seitenbohrungen in der Kolbenstange 21 und den Mediumförderkanal 42 in den Betätigungszylinder 34 eindringt
und dort ebenfalls einen Innendruck erzeugt, da die Austrittsöffnung 43 durch den Ventilkörper 35 verschlossen
ist. Infolge der Differenzdrücke auf die unterschiedlich
großen Kolbenstufen 38, 39 wird der Ventilkörper 35 im
Betätigungszylinder 34 gegen die Kraft der Federstege 40
nach unten verschoben und öffnet das Zusatzventil 36, so
daß das Medium aus der Austrittsöffnung 43 austreten kann.
Die Austrittsöffnung wird also erst dann geöffnet, wenn
das Medium unter einem durch die Kolben-Differenzflächen
und die Federkraft der Federstege 40 bestimmten Druck
steht und nach Absinken dieses Druckes sofort geschlossen
wird. Der Druckabbau erfolgt relativ rasch, weil dann die
Kolbenmanschette 20 mit ihrem unteren dichtenden Ende
über eine Ausnehmung 55 in der Pumpenzylinderwand
streicht, so daß die Dichtmanschette und dem unter Druck
befindlichen Medium in der Pumpenkammer 18 umgangen wird
und der Druck schlagartig zusammenbricht. Übertretendes
Medium kann durch die Luftausgleichsöffnungen 26 in den
Behälter zurückfließen.

Diese Ausnehmung 45 hilft auch zum erstmaligen Ansaugen bei
noch luftgefüllter Pumpenkammer. Die komprimierte Luft
kann über die Ausnehmung 55 ebenfalls ins Behälterinnere
zurückströmen, so daß beim nächsten Aufwärtshub ein Unterdruck erzeugt wird, der über das Ansaugventil 17 und den
Saugschlauch 16 Medium in die Pumpenkammer saugt.

Es ist zu erkennen, daß das Zusatzventil 36 den Auslaßkanal
47, der in seinem letzten Abschnitt den stangenartigen
Abschnitt des Ventilkörpers 35 umgibt, unmittelbar an der
Austrittsöffnung 43 verschließt, wobei die in die
Austrittsöffnung ragende Spitze des Ventilkörpers diese
stets frei hält. Da das Zusatzventil 36 nur in einer Rich-

A 21 023 EP      - 9 -

tung, nämlich in Austrittsrichtung, öffnet, kann auch beim äußeren Überdruck oder einem Unterdruck im Behälter keine Luft in den Auslaßkanal eintreten oder eventuell bereits verschmutztes Medium wieder zurückgesaugt werden.

Die in Fig. 2 dargestellte Variante ist in allen Details mit Ausnahme der im folgenden beschriebenen mit der Ausführung nach Fig. 1 identisch. Bezüglich gleicher Teile wird, ebenso wie bei den weiteren folgenden Varianten, auf die vorhergehende Beschreibung Bezug genommen, und gleiche Teile tragen gleiche Bezugszeichen, während ähnliche bzw. funktionsgleiche Teile gleiche Bezugszeichen mit einem Index erhalten.

Anstelle der einfachen Austrittsöffnung bei Fig. 1 ist bei Fig. 2 eine Zerstäuberdüse am Ende des Betätigungsdrückers 28a vorgesehen. Er enthält an der oberen Stirnfläche der den Ausgleichskanal 47 bildenden Bohrung drei Nuten 50, d.h. zwischen entsprechenden Rippen spiral ausgebildete Nuten, die dem Medium beim Durchströmen einen Drall erzeugen, so daß das Medium in der Austrittsdüse 43a einen erheblichen Drall hat, der den Flüssigkeitsstrahl beim Austreten aus der Austrittsdüse kegelartige auseinanderreißt und zerstäubt. Die Austrittsdüse 43a wird von einer Düsennadel 37a am Ende des Ventilkörpers 35a verschlossen. Anschließend an diese Düsennadel hat der Ventilkörper eine Stufe 52, die die Drallnuten 50 teilweise überdecken und sie teilweise nach unten hin abschließen. An der Düsennadel 37a könnte noch eine in den oberen Teil der Zerstäuberdüse 43a hineinreichende Nadel angeformt sein, die auch bei außerordentlich leicht verhärtenden oder eintrocknenden Flüssigkeiten die Düse stets freistößt.

Bei dieser Ausführung ist der Hauptteil der Zerstäuberdüse, nämlich die Drallnuten, und der untere Teil der Düsenöffnung stets verschlossen, und durch die mechanische
Bewegung des Zusatzventilkörpers 35a beim Öffnen wird die
Düsenöffnung gut freigehalten. In diesem Bereich kann also
keine Flüssigkeit eintrocknen. Außerdem ändert sich der
Düsenquerschnitt durch das Öffnen, so daß er sich automatisch an den jeweiligen Flüssigkeitsdruck anpassen kann.
Bei der dargestellten Ausführung sind der Zusatzventilkörper und seine Federn so ausgelegt, daß er relativ
schlagartig seinen vollen Ventilhub macht und die Düse
ganz freigibt, es könnte jedoch auch vorgesehen sein, daß
der Ventilkörper sich je nach dem Flüssigkeitsdruck unterschiedlich weit zurückbewegt, und dementsprechend könnte auch
die Düsennadel beispielsweise spitz-konisch ausgebildet sein
und somit den Flüssigkeitskanal kontinuierlich an
Flüssigkeitsdruck und damit die austretende Flüssigkeitsmenge anpassen.

Ein weiterer Vorteil besteht darin, daß die Zerstäuberdüse, d.h. die Drallnuten, und die Austrittsöffnung
unmittelbar an den Betätigungsdrücker angeformt sind, so
daß kein besonderer Düsenkörper eingesetzt werden muß. Die
Zerstäuberdüse kann einen größeren Durchmesser haben, weil
der Querschnitt durch die Düsennadel reduziert wird. Dies erleichtert die Fertigung.

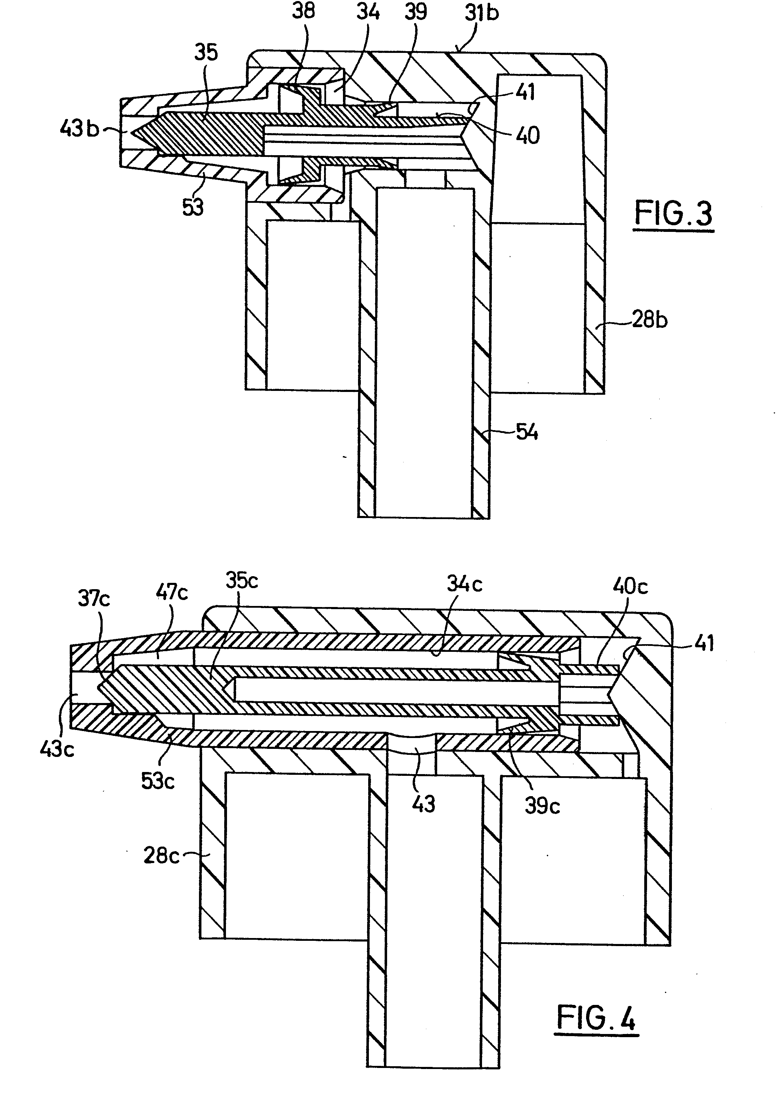

Während bei den Ausführungen nach Fig. 1 und 2 die Austrittsöffnung 43 bzw. die Düse 43a in Achsrichtung angeordnet und am Ende eines fingerartigen Ansatzes des Betätigungsdrückers angeordnet war, um beispielsweise als
Nasenspray oder dgl. zu dienen, ist bei Fig. 3 die Austrittsöffnung 43b an einem seitlichen Ansatz 53 des Betätigungsdrückers 28b angeordnet. Die Pumpe, auf den der
Betätigungsdrücker 28b aufgesetzt ist, kann der nach Fig.1
entsprechen.

Der Betätigungsdrücker 28b hat die Form eines umgekehrten zylindrischen Topfes mit dem seitlichen Austrittsstutzen 53 und einer oberen Druckfläche 31b. Innen ist ein zylindrischer Stutzen 54 angeformt, der auf die Kolbenstange der nicht dargestellten angeschlossenen Pumpe aufgepreßt ist. Der Stutzen und damit der Mediumförderkanal steht mit einem im Betätigungsdrücker vorgesehenen stufenförmigen Betätigungszylinder 34b in Verbindung, der die in Fig. 1 beschriebene Form und Funktion hat, mit dem Unterschied, daß er horizontalachsig angeordnet ist und sein Abschnitt mit geringerem Durchmesser im Betätigungsdrücker vorgesehen ist, während der Abschnitt größeren Durchmessers in dem darin eingepreßten Stutzen 53 ausgebildet ist. Der Ventilkörper 35 und seine Abstützfläche 41 entsprechen identisch denen nach Fig. 1, obwohl hier eine größere Austrittsöffnung 43b für ein breiartiges Medium vorgesehen ist. Auch die Funktion entspricht der bereits erläuterten.

Die Ausführungsform nach Fig. 4 hat ebenfalls eine horizontal gerichtete, relativ große Austrittsöffnung 43c, die von dem Ventilsitz 37c eines horizontal angeordneten Ventilkörpers 35c verschlossen wird. Der Betätigungszylinder 34c für den Ventilkörper 35c ist an einem Stutzen 53c vorgesehen, der in eine Öffnung im Betätigungsdrücker 28c eingesetzt ist. Der Anschluß an den von der Pumpe kommenden Mediumförderkanal 42 erfolgt in diesem Falle zwischen der Austrittsöffnung 43c und einer Kolbenmanschette 39c des Ventilkörpers 35c. Dieser hat eine langgestreckte Stangenform und ist, wie alle vorher beschriebenen Ventilkörper, mit Manschette und den Federstegen 40c einstückig aus Kunststoff hergestellt. Die Federstege 40c liegen wiederum auf einer konischen Fläche 41 im Betätigungsdrücker. Die Kolbenmanschette 39c grenzt einen ringförmigen Druckraum im Betätigungszylinder ab, so daß beim Aufbau eines Mediumdruckes im Betätigungszylinder 34c der Ventilkörper nach rechts verschoben wird und der Ventilsitz 37c die
Austrittsöffnung 43c freigibt. Dabei wird der linke (vordere) Abschnitt des Ventilkörpers 35c in einer entsprechenden an die Austrittsöffnung 43c anschließenden Bohrung geführt, und der Ausgleichskanal 47c ist durch Nuten
in der Wandung dieser Öffnung gebildet.

Bei allen Ausführungen ist normalerweise der Betätigungsdrücker auf die Kolbenstange aufgepreßt, jedoch von dieser
abnehmbar. Es können somit für die gleiche Pumpe mehrere
Arten von Betätigungsdrückern vorgesehen sein. Die Verbindung zwischen dem Betätigungsdrücker und der Pumpenkammer ist nur während der eigentlichen Betätigung druckbelastet, und ein Lösen des Betätigungsdrückers beeinträchtigt
die Dichtheit der Pumpe und des Behälters nicht.

0129643

A 21 023 EP

Anmelderin:     Ing. Erich Pfeiffer
                GmbH & Co. KG
                Josef-Bosch-Straße 4

                7760 Radolfzell

Zerstäuber- oder Dosierpumpe

A n s p r ü c h e

1. Zerstäuber- oder Dosierpumpe mit einem Auslaßventil (23),
   einem stromab davon liegenden Auslaßkanal (47, 47c), der
   in einer Mündung in Form einer Austrittsöffnung (43, 43b,
   c) oder einer Zerstäuberdüse (43a) endet, und einem im
   Auslaßkanal angeordneten zusätzlichen Verschlußorgan,
   dadurch gekennzeichnet, daß das Verschlußorgan ein ausschließlich in Auslaßrichtung öffnendes Ventil (36) ist.

2. Pumpe nach Anspruch 1, dadurch gekennzeichnet, daß das
   Ventil (36) vom Druck der geförderten Mediums betätigbar
   ist.

3. Pumpe nach Anspruch 1 oder 2, dadurch gekennzeichnet, daß
   das Ventil (36) unmittelbar an der Mündung der Austrittsöffnung (43, 43a - c) angeordnet ist.

4. Pumpe nach einem der vorhergehenden Ansprüche, dadurch gekennzeichnet, daß das Ventil (36) einen von
innen mit der Austrittsöffnung (43, 43a - c) zusammenarbeitenden stangenartigen Ventilkörper (35, 35a - c)
aufweist.

5. Pumpe nach einem der vorhergehenden Ansprüche, dadurch gekennzeichnet, daß das Ventil (36) von einem auf
dem Ventilkörper (35, 35a - c) angeordneten Kolben betätigbar ist, der vorzugsweise ein Doppelkolben mit
unterschiedlich großen, von beiden Seiten beaufschlagten Kolbenflächen ist.

6. Pumpe nach einem der vorhergehenden Ansprüche, dadurch gekennzeichnet, daß der Ventilkörper (35, 35a,c)
durch eine aus elastischen, nach außen spreizbaren
Stegen (40) bestehende Feder gebildet ist, deren Enden
vorzugsweise an einer kegelförmigen Fläche (41) anliegen.

7. Pumpe nach Anspruch 5 und 6, dadurch gekennzeichnet, daß
der Ventilkörper (35, 35a, c) einschließlich eines Ventilsitzes (37, 37a), Kolbenmanschetten (38, 39, 39c)
und den Stegen (40) einstückig aus Kunststoff hergestellt sind.

8. Pumpe nach einem der vorhergehenden Ansprüche, dadurch
gekennzeichnet, daß das ventilsitzseitige Ende des
Ventilkörpers (35a) ein Bauteil einer Zerstäuberdüse
(43a) bildet, die vorzugsweise einen vom Ventilkörper
(35a) veränderlichen Düsenquerschnitt hat.

9. Pumpe nach einem der vorhergehenden Ansprüche, dadurch
gekennzeichnet, daß drei Kanäle der Zerstäuberdüse (43a) in Form von Drallnuten (50) an einem Pumpenbauteil, insbesondere einem Betätigungsdrücker (28) angeordnet sind und vom Ventilkörper (35a) teilweise überdeckt sind.

0129643

1/2

FIG.1

FIG.2

0129643

FIG.3

FIG.4

0129643

Nummer der Anmeldung

**Europäisches Patentamt**

# EUROPÄISCHER RECHERCHENBERICHT

## EINSCHLÄGIGE DOKUMENTE

EP 84102883.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE - A - 1 653 419 (DIAMOND) <br> * Fig. 1, Pos. 57; Seite 23, Zeilen 4-7 * | 1,2 | F 04 B 21/02 <br> B 05 B 9/043 <br> B 65 D 47/34 |
| Y | * Fig. 1, Pos. 57; Seite 23, Zeilen 4-7 * | 3-5,8 | |
| | -- | | |
| Y | US - A - 4 182 496 (BURKE) <br> * Gesamt * | 3-5,8 | |
| | -- | | |
| A | DE - A - 2 128 981 (SOLFRENE) <br> * Fig. 1,5 * | 6,7 | |
| | -- | | |
| A | EP - A1 - 0 066 017 (NORDSON) <br> * Fig. 2,3; Anspruch 10 * | 9 | |
| | ---- | | |

|  |
|---|
| RECHERCHIERTE SACHGEBIETE (Int. Cl. ³) |
| F 04 B <br> B 05 B <br> B 65 D <br> B 67 D <br> F 16 K |

Der vorliegende Recherchenbericht wurde für alle Patentansprüche erstellt.

| Recherchenort | Abschlußdatum der Recherche | Prüfer |
|---|---|---|
| WIEN | 24-09-1984 | WITTMANN |